# EUROPEAN PATENT APPLICATION

(11) **EP 1 701 277 A2**
(43) Date of publication of application: **13.09.2006**
(21) Application number: 06250159.8
(22) Date of filing: 13.01.2006
(51) Int. Cl.: G06F 17/30

(54) **Method of generating directory structure for content search**

(30) Priority: 10.03.2005 KR 2005020024
(71) Applicant: Samsung Electronics Co., Ltd., Suwon-si, Gyeonggi-Do (KR)
(72) Inventor: Han, Kuk-hyun, Yeongtong-gu Suwon-si Gyeonggi-do (KR); Eo, Kil-su, Songpa-gu Seoul (KR)
(74) Representative: Brandon, Paul Laurence

(57) **Abstract**

A method of generating a directory structure used for a content search which can maximize a user's convenience is provided. The method includes: generating a plurality of attribute directories based on a plurality of content attributes; and generating a content directory containing a plurality of content having the contents attributes.

## Description

The present invention relates to methods of generating a directory structure used for a content search and to computer-readable recording media storing a computer program for executing such methods.

As the amount of multimedia content a user uses has increased, it has become more inconvenient for users to search for content that they want. In order to deal with such considerable amounts of multimedia content, content addressable memories have been developed, and various content search techniques and related directory structures also have been suggested.

However, it is almost impossible to realize a content search method that can perfectly satisfy every user's demands using only one of those methods. A content search engine may be able to provide satisfactory content search results to those who know at least the title of content that they desire to search for. However, for those who do not know anything about the content that they desire to search for except for such additional information as the genre or an author of the content, a content directory structure must be provided so that they can search for content based on what category the content is classified into.

In addition, for those who do not precisely know about the content they want to search for but have only vague ideas, the content needs to be connected to one another on an association basis.

The commercialization of various conventional content search techniques capable of being used to search for a considerable amount of multimedia content is under way. However, content search techniques based on directory structures have not yet been developed.

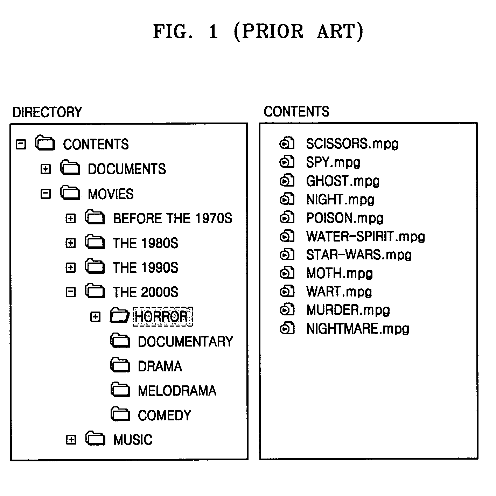

FIG. 1 is a diagram illustrating a conventional directory structure used for a content search. Referring to FIG. 1, the conventional directory structure is comprised of large categories, intermediate categories, and small categories. For example, the large categories include a 'DOCUMENTS' category, a 'MOVIES' category, and a 'MUSIC' category. The 'MOVIES' category includes four intermediate categories, i.e., a 'BEFORE THE 1970s' category, a 'THE 1980s' category, a 'THE 1990s' category, and a 'THE 2000s' category, and each of the four intermediate categories includes 5 small categories, e.g., a HORROR MOVIE category, a DOCUMENTARY category, a DRAMA category, a MELODRAMA category, and a COMEDY category. The conventional directory structure allows a user to view a list of content only when the user sequentially selects a large category, an intermediate category, and a small category.

In short, in a content search using the conventional directory structure, the user sequentially selects a large category, an intermediate category, and a small category from the conventional directory structure and then can view a list of content belonging to the selected small category. However, the conventional directory structure has the following disadvantages.

First, the user is required to precisely know which large, intermediate, and small categories the content of interest belongs to.

Second, once the conventional directory structure is fixed, it is difficult to add content to the conventional directory structure, especially when it is unclear how the content should be classified.

Third, the user cannot view a list of content until he or she gets down to a lowermost level of the conventional directory structure.

Fourth, it is almost impossible for the conventional directory structure to reflect a variety of attributes of content. For example, a movie may have information regarding a director, a leading actor and/or actress, running time, original sound track (OST), writers of the OST, and a country where it was made as its attributes. However, it is almost impossible to reflect such attributes in the conventional directory structure. The conventional directory structure provides a hyperlink-based content search function that allows the user to search for content of interest using a 'show attribute' menu by inputting attribute information obtained from a lowermost category of the conventional directory structure where the content of interest is located in a search.

Exemplary embodiments of the present invention aim to provide a method of generating a directory structure used for a content search which can maximize a user's convenience.

According to an aspect of the present invention, there is provided a method of generating a directory structure used for a content search which includes a plurality of content attributes and respective attribute values. The method includes: generating a plurality of attribute directories based on the content attributes; and generating a content directory containing a plurality of content having the content attributes.

The method may also include generating a plurality of subdirectories of the selected attribute directory containing content that is classified according to the selected attribute if one of the attribute directories is selected.

The subdirectories of the selected attribute directory may include all of the attribute directories excluding the selected attribute directory, a plurality of attribute value directories corresponding to the selected attribute directory, and a content directory containing the content that is classified according to the selected attribute directory.

The method may also include generating a plurality of directories displaying a plurality of attributes of the selected content as subdirectories of the selected content, if some of the content contained in the content directory is selected.

The method may also include generating a plurality of directories containing the content that is classified according to the selected attribute value as subdirectories of the selected attribute value directory, if one of the attribute value directories of the selected attribute directory is selected.

The subdirectories of the selected attribute value directory may include all of the attribute value directories of the selected attribute directory excluding the selected attribute value directory and a contents directory containing the content that is classified according to the selected attribute value.

The method may also include generating a plurality of directories displaying a plurality of attributes of the selected content as subdirectories for the selected content, if some of the content contained in the content directory is selected.

The method may also include generating a plurality of subdirectories of the selected subdirectory of the selected content, if one of the subdirectories of the selected content is selected. The subdirectories of the selected subdirectory of the selected content may include the subdirectories of the selected content excluding the selected subdirectory, and a content directory containing the content classified according to the selected subdirectory of the selected content as a plurality of subdirectories of the selected subdirectory of the selected content.

Each of the subdirectories of the selected content may be related to an attribute value of the selected content.

In the generating of the attribute directories, attribute directories related to the attributes of the content may be generated.

The attribute directories may be generated using a database that maps the content and the respective content attributes.

The database may be updated at predetermined intervals of time.

The database may be updated whenever new content is added to the directory structure.

In the generating of the subdirectories of the selected attribute directory, the subdirectories of the selected attribute directory may be generated using an attribute value list that is previously stored.

The attribute value list may be updated at predetermined intervals of time.

The attribute value list may be updated whenever new content is added to the directory structure.

If none of the content is classified according to the selected attribute directory, the subdirectories of the selected attribute directory may not be generated.

According to another aspect of the present invention, there is provided a computer-readable recording medium storing a computer program for executing the above-described method.

Further features of the present invention are set out in the appended claims.

The present invention will become more apparent by describing in detail exemplary embodiments thereof, by way of example only, with reference to the attached drawings in which:

FIG. 1 is a diagram illustrating a conventional directory structure;

FIG. 2 is a diagram illustrating a directory structure according to an exemplary embodiment of the present invention;

FIG. 3 is a flowchart illustrating a method of generating a directory structure used for a content search according to an exemplary embodiment of the present invention;

FIGS. 4 through 8 are diagrams illustrating various states of a directory structure according to an exemplary embodiment of the present invention;

FIG. 9 is a mapping table indicating a plurality of content and the respective sets of content attributes; and

FIG. 10 is a table indicating a plurality of content attributes and the respective sets of attribute values.

The present invention will now be described more fully with reference to the accompanying drawings in which exemplary embodiments of the invention are shown.

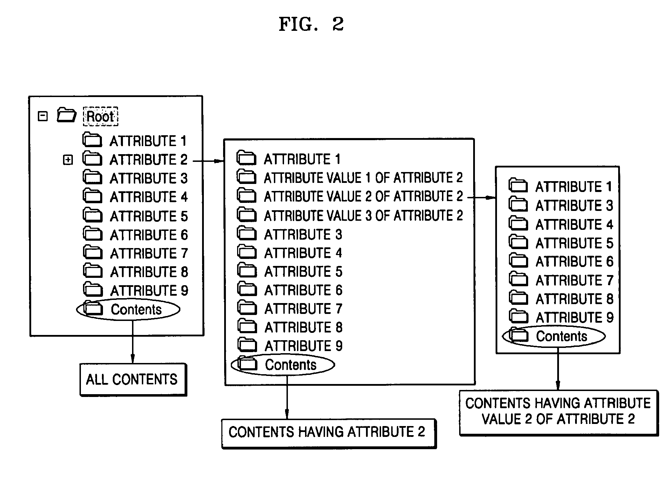

FIG. 2 is a diagram illustrating a directory structure according to an exemplary embodiment of the present invention. Referring to FIG. 2, a root directory (Root) includes first through ninth attribute directories (attributes 1 through 9) and a first content directory (Contents) containing all of a plurality of content contained in the content directory. The first through ninth attribute directories correspond to first through ninth attributes, respectively. In an exemplary embodiment of the present embodiment, the content included in the directory structure may correspond to all or some of the first through ninth attributes.

The second attribute directory includes the first attribute directory, a first attribute value directory regarding a first value of the second attribute, a second attribute value directory regarding a second value of the second attribute, a third attribute value directory regarding a third value of the second attribute, the third through ninth attribute directories, and a second content directory (Contents) containing the content corresponding to the second attribute. The first through third values of the second attribute are detailed information regarding the second attribute. The first and third through ninth attributes, like the second attribute, may include their own attribute value directories.

The second attribute value directory includes all of the first and third through ninth attribute directories and a third content directory (Contents) containing the content corresponding to the second values of the second attribute.

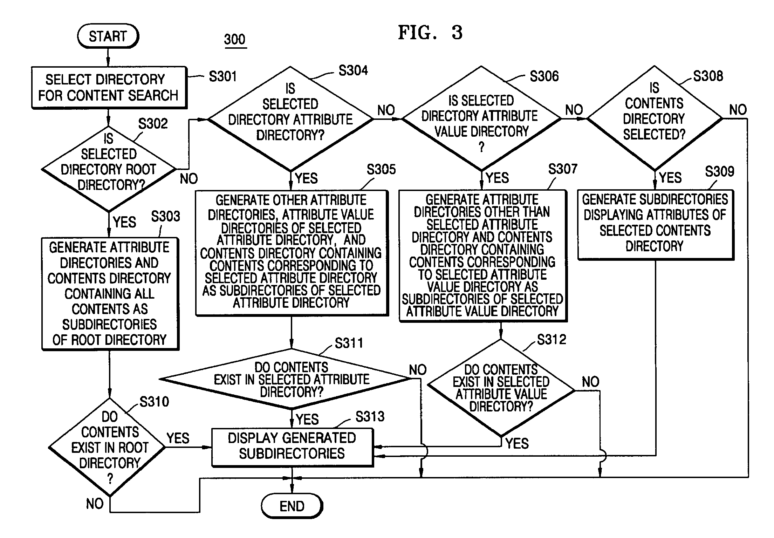

FIG. 3 is a flowchart illustrating a method of generating a directory structure used for a content search according to an exemplary embodiment of the present invention. Referring to FIG. 3, in operation S301, a directory of a directory structure is selected for a content search.

In operation S302, it is determined whether the selected directory is a root directory of the directory structure. In operation S303, if the selected directory is the root directory of the directory structure, a content directory (Contents) containing all of a plurality of content included in the directory structure and a plurality of attribute directories including content included in the directory structure related to respective attributes are generated as subdirectories of the root directory.

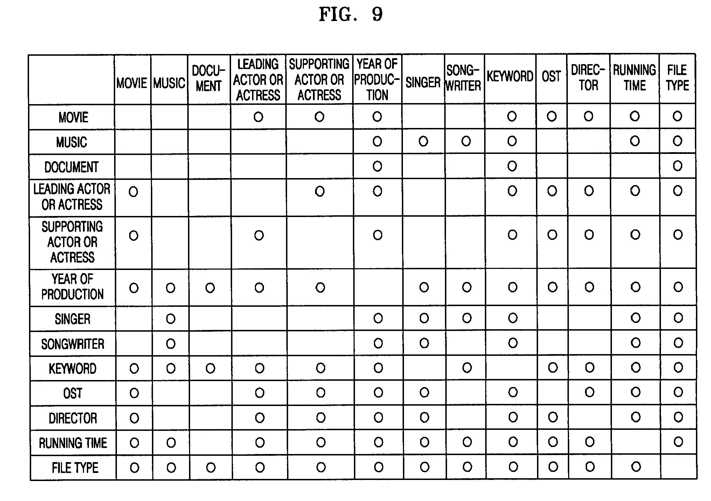

In order to generate the attribute directories in operation S303, a database in which the plurality of content are mapped to the respective sets of content attributes on an association basis may be used. FIG. 9 illustrates an example of a mapping table that maps a plurality of content to the respective sets of content attributes on an association basis. The database may be updated at predetermined intervals of time or whenever new content is added to the directory structure.

In operation S304, if the selected directory is not the root directory of the directory structure, it is determined whether the selected directory is an attribute directory.

In operation S305, if the selected directory is an attribute directory, then all of the attribute directories excluding the selected directory, the attribute value directories related to the attribute of the selected directory, and a content directory containing a plurality of content corresponding to the predetermined attribute related to the selected directory are generated as subdirectories of the selected directory.

In order to generate the attribute value directories in operation S305, an attribute value list previously stored may be used. The attribute value list may be updated at predetermined intervals of time or whenever new content is added to the directory structure.

In operation S306, if the selected directory is determined not to be one of the attribute directories in operation S304, it is determined whether the selected directory is an attribute value directory.

In operation S307, if the selected directory is an attribute value directory, then the attribute directories other than the attribute directory of the selected directory are subdirectories, and a third content directory containing a plurality of content corresponding to the attribute value related to the selected directory are generated as subdirectories of the selected directory.

In operation S308, if the selected directory is not an attribute value directory, it is determined whether the selected directory is a content directory.

In operation S309, if the selected directory is determined to be a content, a plurality of attribute value directories corresponding to the content are generated as subdirectories of the selected directory.

Once the subdirectories of the selected directory are generated in operation S303, S305, or S307, it is determined whether they contain any contents in operation S310, S311, or S312. In operation S313, the subdirectories of the selected directory that contain content are displayed. The subdirectories that do not contain content are not displayed.

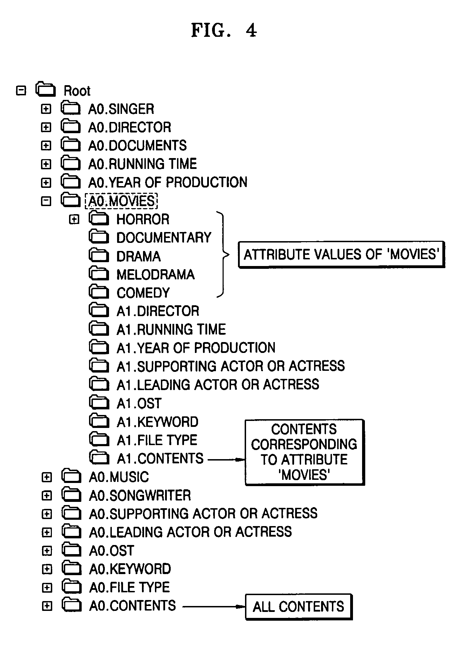

FIGS. 4 through 8 are diagrams illustrating various states of a directory structure according to an exemplary embodiment of the present invention.

Specifically, FIG. 4 illustrates a case where a root directory of a directory structure according to an exemplary embodiment of the present invention is selected and then one of a plurality of attribute directories, i.e., an 'A0.MOVIE' directory, is selected. Referring to FIG. 4, the attribute directories, which are subdirectories of the root directory, include an 'A0.SINGER' directory, an 'A0.DIRECTOR' directory, an 'A0.DOCUMENT' directory, an 'A0.RUNNRUG TIME' directory, an 'A0.YEAR OF PRODUCTION' directory, the 'A0.MOVIE' directory, an 'A0.MUSIC' directory, an 'A0.SONGWRITER' directory, an 'A0.LEADING ACTOR AND/OR ACTRESS' directory, a 'A0.SUPPORTING ACTOR and/or ACTRESS' directory, a 'A0.OST' directory, an 'A0.KEYWORD' directory, and an 'A0.FILE TYPE' directory. If the 'A0.MOVIE' directory is selected, attribute value directories regarding attribute values of an attribute 'MOVIES', some of the attribute directories that are closely related to the attribute 'MOVIES', such as an 'A1.DIRECTOR' directory, an 'A1.RUNNING time' directory, an 'A1.YEAR of production' directory, an 'A1.LEADING ACTOR and/or ACTRESS' directory, an 'A1.SUPPORTING ACTOR and/or ACTRESS' directory, an 'A1.OST' directory, an 'A1.KEYWORD' directory, and an 'A1.FILE TYPE' directory, and an 'A1.CONTENTS' directory containing a plurality of contents corresponding to the attribute 'MOVIES' are generated as subdirectories of the 'A1.MOVIE' directory. Here, the attribute value directories include a 'HORROR' directory, a 'DOCUMENTARY ' directory, a 'DRAMA' directory, a 'MELODRAMA ' directory, and a 'COMEDY' directory.

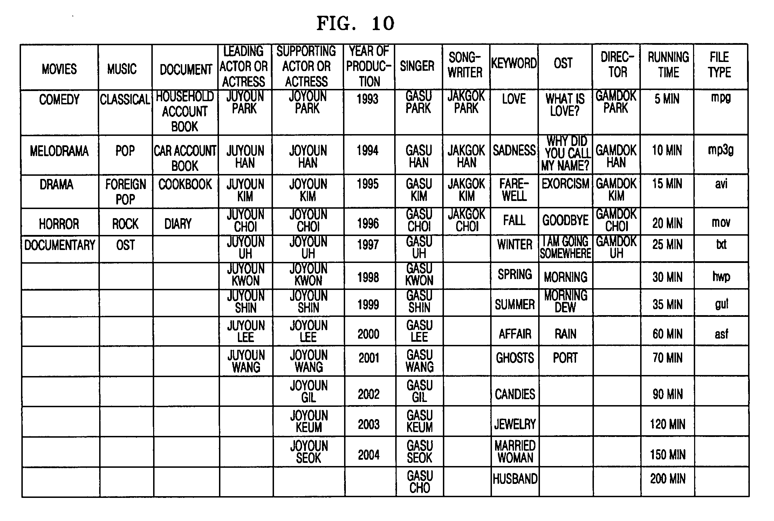

When generating the attribute value directories relating to the attribute values of the attribute 'MOVIES', an attribute value list illustrated in FIG. 10 may be used. In addition, when generating the attribute directories closely related to the attribute 'MOVIES' as the subdirectories of the 'MOVIES' directory, the table illustrated in FIG. 9 may be used.

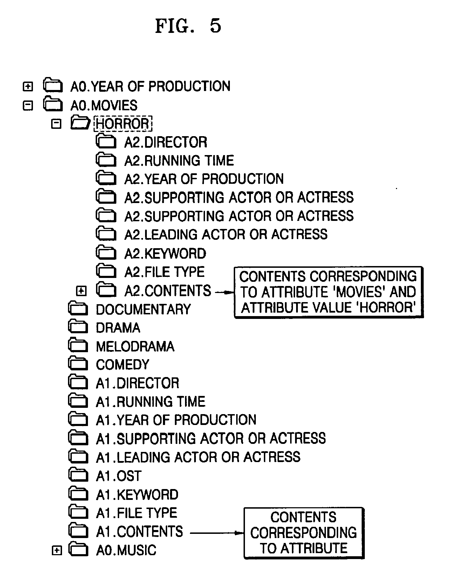

FIG. 5 illustrates a case where the 'HORROR' directory is selected from the directory structure of FIG. 4. Referring to FIG. 5, if the 'HORRORr' directory is selected, the attribute directories closely related to the attribute 'MOVIES', such as an 'A2.DIRECTOR' directory, an 'A2.RUNNING TIME' directory, an 'A2.YEAR OF PRODUCTION' directory, an 'A2.LEADING ACTORr AND/OR ACTRESS' directory, an 'A2.SUPPORTING ACTOR AND/OR ACTRESS' directory, an 'A2.OST' directory, an 'A2.KEYWORD ' directory, and an 'A2.FILE TYPE' directory, and an 'A2.CONTENTS' directory containing a plurality of content corresponding to an attribute value HORRORr' are generated as subdirectories A2 of the 'HORROR' directory.

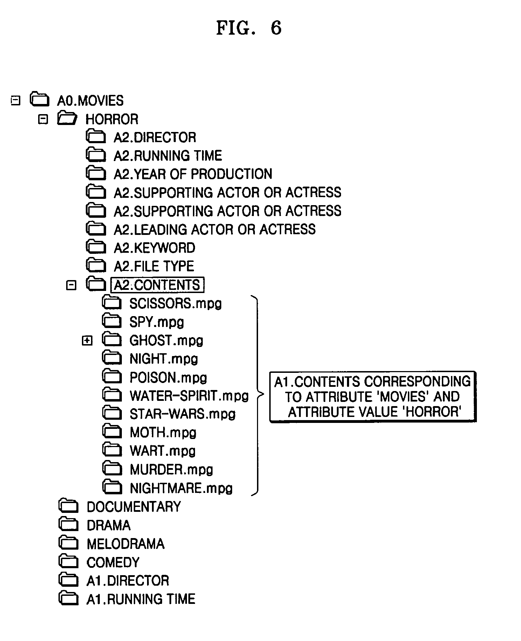

FIG. 6 illustrates a case where the 'A2.CONTENTS' directory is selected in the directory structure of FIG. 5. Referring to FIG. 6, the 'A2.CONTENTS' directory contains some of the content contained in the 'A1.CONTENTS' directory of the 'A0.MOVIE' directory corresponding to the attribute value 'HORROR'. The content contained in the 'A2.CONTENTS' directory include SCISSOR.mpg, SPY.mpg, GHOST.mpg, NIGHT.mpg, POISON.mpg, WATER-SPIRITt.mpg, STAR-WARS.mpg, MOTH.mpg, WART.mpg, MURDER.mpg, and NIGHTMAREe.mpg.

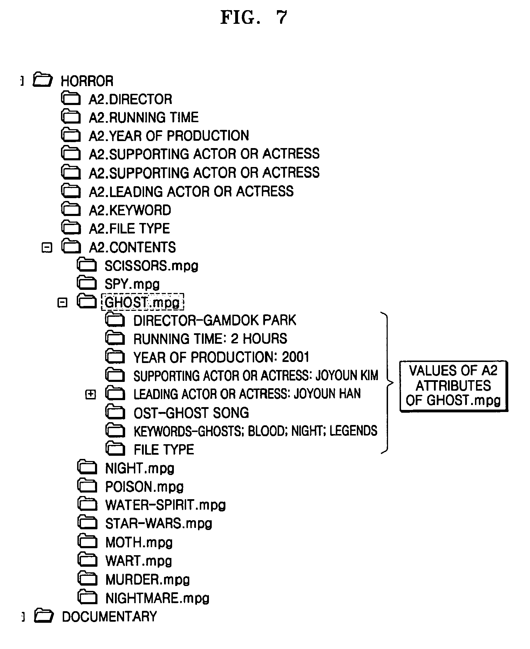

FIG. 7 illustrates a case where the content GHOST.mpg is selected in the directory structure of FIG. 6. Referring to FIG. 7, if the content GHOST.mpg is selected, subdirectories of the content GHOST.mpg are generated using attribute values of the content GHOST.mpg.

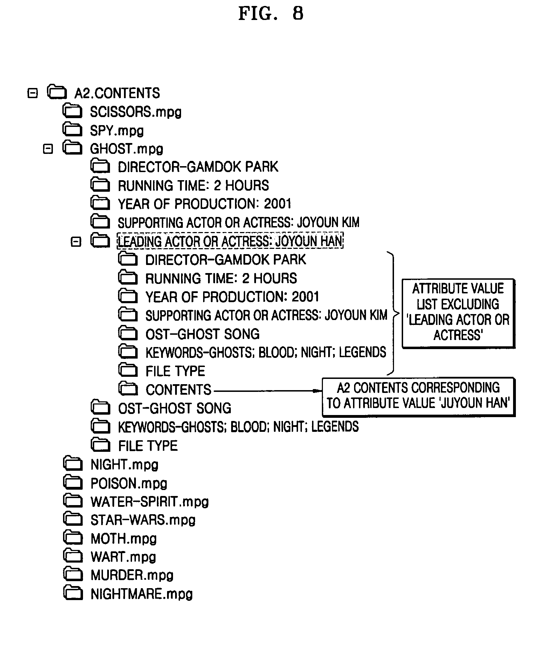

FIG. 8 illustrates a case where one of the attribute values of the content GHOST.mpg, i.e., 'LEADING ACTOR OR ACTRESS - Joyoun Han', is selected. Referring to FIG. 8, if the attribute value 'LEADING ACTOR OR ACTRESS - Joyoun Han' is selected, the other attribute value directories for the content GHOST.mpg and a content directory containing a plurality of content corresponding to the attribute value 'LEADING ACTOR OR ACTRESS - Joyoun Han', i.e., a content directory containing movie contents in which a person whose name is Joyoun Han starred as a leading actor or actress, are generated.

FIG. 9 is a mapping table indicating a plurality of content and the respective sets of content attributes. Referring to FIG. 9, content corresponding to an attribute 'MOVIES' may also correspond to other attributes, such as 'leading actor or actress', 'SUPPORTING ACTOR or ACTRESS', 'YEAR of PRODUCTION', 'KEYWORD', 'OST', 'DIRECTOR', 'RUNNING TIME', and 'FILE TYPE'. The mapping table enables a user to easily determine what attribute directories are to be included as subdirectories of an attribute directory. Thus, it is possible to remove empty attribute directories from the directory structure in advance and reduce the amount of time required to generate the attribute directories by using the mapping table.

FIG. 10 is a table indicating a plurality of content attributes and the respective sets of attribute values. Referring to FIG. 10, an attribute 'MOVIES' includes attribute values 'COMEDY', 'MELODRAMA', 'DRAMA', 'HORROR', and 'DOCUMENTARY', and an attribute 'MUSIC' includes attribute values 'CLASSICAL MUSIC', 'POP SONG', 'ROCK MUSIC', and 'OST'. When a predetermined attribute directory is selected from a directory structure, it is no longer displayed in the directory structure, and only a plurality of attribute value directories related to the predetermined attribute directory are generated as subdirectories of the predetermined attribute directory. Thus, if a list of attribute values related to the predetermined attribute directory is prepared in advance, the amount of time required for generating the attribute value directories related to the predetermined attribute directory may be considerably reduced.

As described above, according to an exemplary embodiment of the present invention, content of interest can be searched for even when a user does not precisely know about what category the content of interest is classified as. Since, in an exemplary embodiment of the present invention, a directory structure used for a content search is generated based on content attributes instead of content classifications, it is possible to easily add new attributes to the directory structure or to easily reclassify the existing attributes contained in the directory structure. Therefore, it is possible to reflect almost all of the attributes of various content into the directory structure.

In addition, all of a plurality of directories at each level of the directory structure contain content, and thus the user can search for the content of interest at any level of the directory structure.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of generating a directory structure used for a content search, which comprises a plurality of content attributes and respective attribute values, the method comprising:
generating a first plurality of attribute directories based on the plurality of content attributes; and
generating a first content directory containing a plurality of content having the plurality of content attributes.

2. The method of claim 1 further comprising, if one of the first plurality of attribute directories is selected, generating a plurality of subdirectories of the selected attribute directory containing content that are classified according to a corresponding selected attribute.

3. The method of claim 2, wherein the plurality of subdirectories of the selected attribute directory comprise all of the plurality of attribute directories excluding the selected attribute directory, a plurality of attribute value directories corresponding to the selected one of the first plurality of attribute directories, and a second content directory containing the content that is classified according to the selected one of the first plurality of attribute directories.

4. The method of any preceding claim further comprising, if one of the content contained in the first content directory is selected, generating a plurality of directories displaying a plurality of attributes of the selected content as subdirectories of the selected content.

5. The method of claim 3 further comprising, if one of the plurality of attribute value directories is selected, generating a plurality of directories containing the content that is classified according to the corresponding selected attribute value as subdirectories of the selected one of the plurality of attribute value directories.

6. The method of claim 5, wherein the subdirectories of the selected one of the plurality of attribute value directories comprise all of the attribute value directories of the selected attribute directory excluding the selected one of the plurality of attribute value directories and a third content directory containing content that is classified according to a corresponding selected attribute value.

7. The method of claim 3 further comprising, if one of the content contained in the second content directory is selected, generating a plurality of directories displaying a plurality of attributes of the selected one of the content as first subdirectories for the selected one of the content.

8. The method of claim 7 further comprising, if one of the first subdirectories of the selected one of the content is selected, generating a plurality of second subdirectories of the selected one of the first subdirectories of the selected one of the content, wherein the plurality of the second subdirectories comprises third subdirectories of the selected one of the content excluding the selected one of the first subdirectories, and a content directory containing the content classified according to the selected one of the first subdirectories of the selected content as a plurality of third subdirectories of the selected one of the subdirectories.

9. The method of claim 7, wherein each of the first subdirectories of the selected content is related to an attribute value of the selected second content.

10. The method of any preceding claim, wherein, in the generating of the first plurality of attribute directories, a second plurality of attribute directories related to the attributes of the at least one of the plurality of content is generated.

11. The method of claim 10, wherein the second plurality of attribute directories are generated using a database that maps the plurality of content and respective plurality of content attributes.

12. The method of claim 11, wherein the database is updated at predetermined intervals of time.

13. The method of claim 11, wherein the database is updated whenever new content is added to the directory structure.

14. The method of claim 3, wherein in the generating of the plurality of subdirectories of the selected attribute directory, the plurality of subdirectories of the selected attribute directory are generated using an attribute value list that is previously stored.

15. The method of claim 14, wherein the attribute value list is updated at predetermined intervals of time.

16. The method of claim 14, wherein the attribute value list is updated whenever new content is added to the directory structure.

17. The method of claim 3, wherein, if none of the content is classified according to the selected one of the first plurality of attribute directories, the plurality of subdirectories of the selected attribute directory are not generated.

18. The method of claim 6, wherein if none of the content is classified according to the corresponding selected attribute value of the selected attribute directory, the subdirectories of the selected one of the plurality attribute value directories is not generated.

19. A computer-readable recording medium storing a computer program for executing the method of any preceding claim.
